# EUROPÄISCHE PATENTSCHRIFT

(11) **EP 4 469 871 B1**
(45) Veröffentlichungstag und Bekanntmachung des Hinweises auf die Patenterteilung: **24.09.2025**
(21) Anmeldenummer: 23719667.0
(22) Anmeldetag: 11.04.2023
(51) Int. Cl.: G05B 19/042

(54) **ELEKTRONIKBAUGRUPPE FÜR EIN AUTOMATISIERUNGSSYSTEM**
ELECTRONICS ASSEMBLY FOR AN AUTOMATION SYSTEM
GROUPE ÉLECTRONIQUE POUR UN SYSTÈME D'AUTOMATISATION

(30) Priorität: 12.04.2022 EP 22167893
(43) Veröffentlichungstag der Anmeldung: 04.12.2024
(73) Patentinhaber: Siemens Aktiengesellschaft, 80333 München (DE)
(72) Erfinder: KORT, Valentin, 76829 Landau (DE); SCHLARB, Eberhard, 79194 Gundelfingen (DE)
(74) Vertreter: Siemens Patent Attorneys
(86) Internationale Anmeldenummer: PCT/EP2023/059401
(87) Internationale Veröffentlichungsnummer: WO 2023/198684

(56) Entgegenhaltungen:
- EP-A1- 3 913 445
- DE-A1- 102009 034 419
- DE-A1- 102013 107 904
- US-A1- 2008 013 226

## Beschreibung

Die Erfindung betrifft eine Elektronikbaugruppe für ein Automatisierungssystem. Zudem betrifft die Erfindung ein Leitsystem für eine technische Anlage, insbesondere Fertigungs- oder Prozessanlage. Außerdem betrifft die Erfindung ein Verfahren zum Betreiben einer Elektronikbaugruppe für ein Automatisierungssystem.

Mit zunehmender Kanalanzahl und aufgrund der beschränkten Baugröße entsteht bei Elektronikbaugruppen wie den Simatic Baugruppen der Firma SIEMENS eine hohe Verlustleistung entstehen. Eine Herausforderung besteht daher darin, dass praktische Maßnahmen gefunden werden müssen, um den Betrieb bei hohen Temperaturen zu gewährleisten. Es ist bekannt, bei einer Elektronikbaugruppe die Anzahl der aktiver Elektronikkanäle zu beschränken, um einer Überhitzung der Elektronikbaugruppe vorzubeugen.

Für den Betrieb der Elektronikbaugruppe gemäß dem HART-Standard wird zudem gemäß dem Stand der Technik eine zusätzliche Schnittstelle benötigt.

In der DE 10 2020 124 592 A1 ist ein Eingabe-/Ausgabe-Modul offenbart. Das Eingabe-/Ausgabe-Modul umfasst eine Mehrzahl von Anschlüssen, wobei jeder Anschluss als Eingang zum Anschluss eines Sensors an das Eingabe-/Ausgabe-Modul verwendet werden kann.

Das Dokument DE 10 2013 107904 A1 offenbart ein Messgerät mit den Merkmalen des Oberbegriffs des Anspruchs 1.

Der Erfindung liegt die Aufgabe zugrunde, eine Elektronikbaugruppe für ein Automatisierungssystem anzugeben, welche gleichzeitig ein effektives Wärmemanagement und einen aufwandsarmen Betrieb nach dem HART-Standard ermöglicht.

Diese Aufgabe wird gelöst durch eine Elektronikbaugruppe für ein Automatisierungssystem mit den Merkmalen des Anspruchs 1.

Außerdem wird die Aufgabe gelöst durch ein Leitsystem für eine technische Anlage, insbesondere Fertigungs- oder Prozessanlage, gemäß Anspruch 8. Außerdem wird die Aufgabe gelöst durch ein Verfahren zum Betreiben einer Elektronikbaugruppe für ein Automatisierungssystem gemäß Anspruch 9. Vorteilhafte Weiterbildungen ergeben sich aus den abhängigen Ansprüchen.

Ein erfindungsgemäße Elektronikbaugruppe für ein Automatisierungssystem weist einen Elektronikkanal oder eine Mehrzahl von Elektronikkanälen auf, wobei die Elektronikbaugruppe wenigstens eine Steuereinheit aufweist. Ein Elektronikkanal weist jeweils auf:
- einen Spannungseingang zum Anlegen einer Eingangsspannung an dem Elektronikanal,
- einen Spannungsausgang zum Abgreifen einer Ausgangsspannung an dem Elektronikkanal, und
- einen Abwärtswandler, der zum Wandeln der an dem Spannungseingang angelegten Eingangsspannung auf die Ausgangsspannung ausgebildet und vorgesehen ist, wobei die Ausgangsspannung betragsmäßig niedriger als die Eingangsspannung ist .

Die Elektronikbaugruppe ist dadurch gekennzeichnet, dass die Steuereinheit dazu ausgebildet und vorgesehen ist, den Abwärtswandler derart anzusteuern, dass ein Signal gemäß dem HART-Standard über die Ausgangsspannung an dem jeweiligen Elektronikkanal abgreifbar ist.

Wenn vorliegend von einem Spannungseingang/Spannungsausgang bzw. Eingangsspannung/Ausgangsspannung die Rede ist, ist es für den Fachmann offensichtlich, dass auch ein Eingangsstrom in den Elektronikkanal einfließen bzw. ein Ausgangsstrom aus dem Elektronikkanal ausfließen kann.

Die Funktionalität der Elektronikbaugruppe ist bevorzugt bidirektional ausgebildet. Dies bedeutet, dass die Steuereinheit in Verbindung mit dem Abwärtswandler nicht nur das HART-Signal an dem Spannungsausgang bereitstellen kann, sondern, dass die Steuereinheit in umgekehrter Richtung in der Lage ist, ein von dem Spannungsausgang erhaltenes HART-Signal in eine weiterverarbeitbare bzw. -nutzbare digitale Information zu bringen.

Im einfachsten Fall verfügt die Elektronikbaugruppe über einen einzigen Elektronikkanal, der die zuvor genannten Bestandteile umfasst. Offensichtlich ist dabei nur eine einzige Steuereinheit vorzusehen, um die erfindungsgemäßen Funktionalitäten bereitzustellen. Für den Fall mehrerer Elektronikkanäle kann eine einzige Steuereinheit, aber auch mehrere Steuereinheiten verwendet werden, die die o.g. Funktionalität bereitstellen.

Die Bezeichnung "ein Signal gemäß dem HART-Standard" meint vorliegend, dass das Signal den Spezifikationen des HART-Standards, die zum Anmeldezeitpunkt der vorliegenden Anmeldung gültig waren, hinsichtlich Spannung, Strom, Schwingungsfrequenz etc. genügt. Bezüglich der genauen Spezifikation sei auf die technische Beschreibung unter der Webquelle https://www.fieldcommgroup.org/technologies/hart/harttechnology-explained
verwiesen.

Die erfindungsgemäße Elektronikbaugruppe setzt in an sich vorteilhafter Weise einen Abwärtswandler ein, der durch die Steuereinheit angesteuert wird. Dadurch ist eine verlustarme Bereitstellung einer Spannung an dem Spannungsausgang möglich, um beispielsweise einen Sensor bzw. Messumformer an dem Spannungsausgang zu betreiben. In besonders vorteilafter Weise erzeugt die Steuereinheit in Kombination mit dem Abwärtswandler ein an dem Spannungsausgang abgreifbares Signal, das dem HART-Standard genügt. Dadurch ist es nicht notwendig, eine separate Einheit für die Erzeugung des HART-Signals bereitzustellen, wodurch die Komplexität der Elektronikbaugruppe verringert und deren Effizienz verbessert werden können.

Bevorzugt ist die Steuereinheit dazu ausgebildet und vorgesehen, den Abwärtswandler derart anzusteuern, dass eine Schwingungsfrequenz der Ausgangsspannung in einem Bereich von 100 Hertz bis 3.000 Hertz, vorzugsweise in einem Bereich von 1000 Hertz bis 2500 Hertz, liegt.

Der Betrag der Ausgangsspannung kann zwischen einen Spannungswert von 8 Volt und einem Spannungswert von 25 Volt liegen, während der Betrag der Eingangsspannung bei einem Spannungswert von im Wesentlichen 30 Volt liegen kann.

Der Abwärtswandler weist bevorzugt wenigstens einen Transistor, insbesondere einen Feldeffekttransistor, auf, wobei die Steuereinheit mit einem Steuereingang des Transistors verbunden ist, um einen Schaltzustand des Transistors zur Wandlung der Eingangsspannung zu steuern.

Besonders bevorzugt weist der oder die Elektronikkanäle jeweils eine Vorrichtung zum Erfassen einer Stärke eines Stroms durch den jeweiligen Elektronikkanal auf. Diese Vorrichtung kann den Betrag der Stromstärke des Stroms messen, der durch den Elektronikkanal, beispielsweise in einen am Spannungsausgang angeschlossenen Sensor, fließt.

Die Steuereinheit kann ein Field Programmable Gate Array (FPGA) oder ein Mikrocontroller sein. Diese Steuereinheiten zeichnen sich durch einen geringen Aufwand an Betriebsenergie aus und sind breit verfügbar.

Die Aufgabe wird zudem gelöst durch ein Leitsystem für eine technische Anlage, insbesondere Fertigungs- oder Prozessanlage, das wenigstens einen Rechnereinheit zum Bedienen und Beobachten der technischen Anlage und eine mit der Rechnereinheit verbundene Elektronikbaugruppe umfasst, die wie zuvor beschrieben ausgebildet ist.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten der verfahrenstechnischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Datenspeicherung und -verarbeitung umfassen.

Eine Rechnereinheit zum Bedienen und Beobachten kann ein sogenannter "Operator Station Server" sein. Darunter wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage zur Visualisierung an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen.

Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Ein Operator der technischen Anlage kann über den Operator Station Client, welcher beispielsweise ein Tablet, ein Smartphone, ein Personal Computer oder dergleichen sein kann, zum Zwecke eines Bedienens und Beobachtens der technischen Anlage auf den Operator Station Server zugreifen.

Die Aufgabe wird zudem gelöst durch ein Verfahren zum Betreiben einer Elektronikbaugruppe für ein Automatisierungssystem, die Elektronikbaugruppe aufweisend einen Elektronikkanal oder eine Mehrzahl von Elektronikkanälen, wobei die Elektronikbaugruppe wenigstens eine Steuereinheit aufweist, ein Elektronikkanal jeweils aufweisend:
- einen Spannungseingang zum Anlegen einer Eingangsspannung an dem Elektronikanal,
- einen Spannungsausgang zum Abgreifen einer Ausgangsspannung an dem Elektronikkanal, und
- einen Abwärtswandler, der zum Wandeln der an dem Spannungseingang angelegten Eingangsspannung auf die betragsmäßig niedrigere Ausgangsspannung ausgebildet und vorgesehen ist, das Verfahren umfassend die folgenden Verfahrensschritte:
   a) Anlegen einer Eingangsspannung an dem Spannungseingang wenigstens eines Elektronikkanals,
   b) Ansteuerung des Abwärtswandlers des wenigstens einen Elektronikkanals durch die Steuereinheit, derart, dass ein Signal gemäß dem HART-Standard über die Ausgangsspannung an dem wenigstens einen Elektronikkanal abgreifbar ist.

Wie bereits zuvor erwähnt, kann die an dem Spannungsausgang anliegende Ausgangsspannung zum Betrieb einer Messeinrichtung zum Erfassen einer physikalischen Größe verwendet werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: eine strukturelle Darstellung einer Elektronikbaugruppe; und
- FIG 2: einen zeitlichen Verlauf einer an dem Spannungsausgang eines Elektronikkanals einer Elektronikbaugruppe anliegenden Spannung.

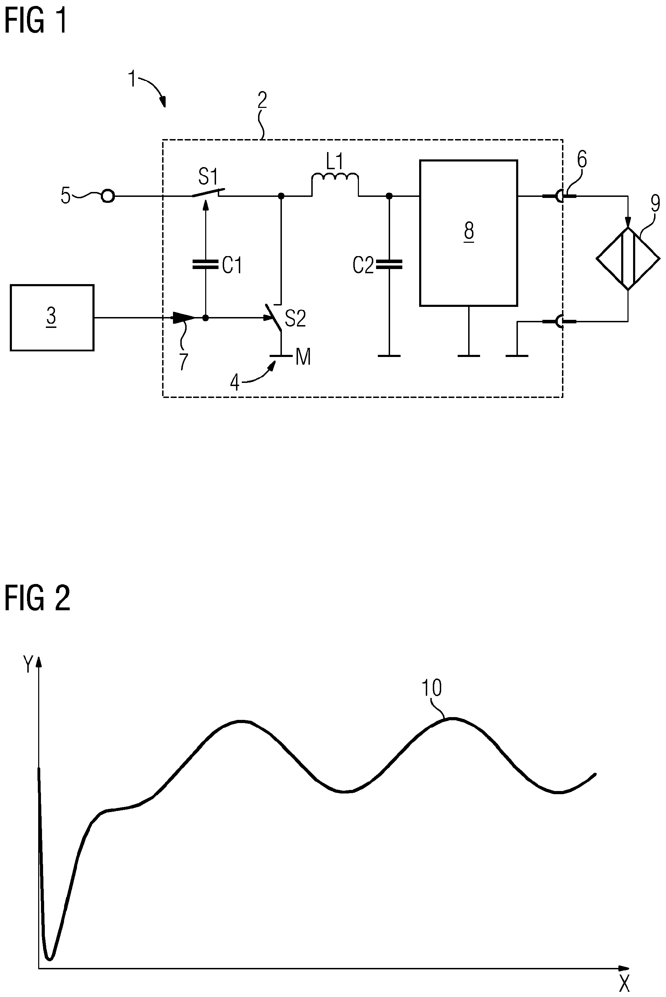

In FIG 1 ist ein Schaltplan einer erfindungsgemäßen Elektronikbaugruppe 1 dargestellt. Die Elektronikbaugruppe 1 weist eine Vielzahl von Elektronikkanälen 2 auf, von denen exemplarisch ein einzelner Elektronikkanal 2 dargestellt ist. Die Elektronikbaugruppe 1 weist eine Steuereinheit 3, einen Abwärtswandler 4, einen Spannungseingang 5 und einen Spannungsausgang 6 auf.

Der Abwärtswandler 4 weist einen ersten Transistor S1, einen zweiten Transistor S2, eine erste Kapazität C1, eine zweite Kapazität C2 und eine Induktivität L1 auf. Die Steuereinheit 3 ist über die erste Kapazität C1 mit einem Steuereingang des ersten Transistors S1 verbunden. Zudem ist die Steuereinheit 3 direkt mit einem Steuereingang des zweiten Transistors S2 verbunden.

Die Steuereinheit 3 ist als ein Field Programmable Gate Array (FPGA) ausgebildet und steuert die beiden Transistoren S1, S2 über ein pulsweitenmoduliertes Signal 7 an. Dieses Signal 7 versetzt entweder den ersten Transistor S1 oder den zweiten Transistor S2 in einen durchlassenden Zustand, so dass der Spannungseingang 5 entweder mit der Induktivität L1 verbunden oder von ihr getrennt ist. Wenn der zweite Transistor S2 in einem durchlassenden Zustand ist, ist die Induktivität L1 mit einer Masse M verbunden.

Der Abwärtswandler 4 wandelt eine an dem Spannungseingang 5 anliegende Eingangsspannung, welche beispielsweise einen Spannungswert von 30 Volt aufweist, in eine betragsmäßig kleinere Ausgangsspannung (beispielsweise in einem Bereich von 8 Volt bis 25 Volt), die an dem Spannungsausgang 6 bereitgestellt wird. Die Steuereinheit 3 ist dazu ausgebildet, den Abwärtswandler 4 derart anzusteuern (durch die Ausprägung des pulsweitenmodulierten Signals), dass ein Signal gemäß dem HART-Standard an dem Spannungsausgang 6 abgreifbar ist. Hierzu sei auf die Ausführungen anhand FIG 2 zu verweisen.

Der Elektronikkanal 2 weist zusätzlich eine Vorrichtung 8 zum Erfassen einer Stärke eines Stroms durch den Elektronikkanal 2 auf. Der Spannungsausgang 6 des Elektronikkanals 2 ist mit einem Messumformer 9 verbunden, welcher der Erfassung einer physikalischen Messgröße dient. Die Steuereinheit 3 ist dazu ausgebildet, von dem Messumformer 9 gemäß dem HART-Standard erzeugte Signale in digitale, weiternutzbare Daten zu wandeln.

In FIG 2 ist eine an dem Spannungsausgang 6 des Elektronikkanals 2 gemessene Ausgangsspannung 10 (Y-Achse in Volt) in einem zeitlichen Verlauf (X-Achse in Millisekunden) dargestellt. Nach einem Einschwingbereich 11 weist die Ausgangsspannung einen Spannungswert auf, der in etwa zwischen 13 Volt und 14 Volt schwingt. Eine Schwingungsfrequenz liegt in etwa bei 2.200 Hertz. Dies entspricht einer logischen Null gemäß dem HART-Standard. Eine logische Eins würde mit der Frequenz 1.200 Hertz übertragen werden. Die Ausgangsspannung 10 kann zusammenfassend als Signal gemäß dem HART-Standard genutzt werden.

## Patentansprüche

1. Elektronikbaugruppe (1) für ein Automatisierungssystem, aufweisend einen Elektronikkanal (2) oder eine Mehrzahl von Elektronikkanälen, wobei die Elektronikbaugruppe (1) wenigstens eine Steuereinheit (3) aufweist, ein Elektronikkanal (2) jeweils aufweisend:
- einen Spannungseingang (5) zum Anlegen einer Eingangsspannung an dem Elektronikanal (2),
- einen Spannungsausgang (6) zum Abgreifen einer Ausgangsspannung an dem Elektronikkanal (2), und
- einen Abwärtswandler (4), der zum Wandeln der an dem Spannungseingang (5) angelegten Eingangsspannung auf die Ausgangsspannung ausgebildet und vorgesehen ist, wobei die Ausgangsspannung betragsmäßig niedriger als die Eingangsspannung ist,
**dadurch gekennzeichnet, dass**
die Steuereinheit (3) dazu ausgebildet und vorgesehen ist, den Abwärtswandler (4) derart anzusteuern, dass ein Signal gemäß dem HART-Standard, welcher zum Anmeldetag der vorliegenden Anmeldung gültig war, über die Ausgangsspannung an dem jeweiligen Elektronikkanal (2) abgreifbar ist.

2. Elektronikbaugruppe (1) nach Anspruch 1, bei der die Steuereinheit dazu ausgebildet und vorgesehen ist, den Abwärtswandler (4) derart anzusteuern, dass eine Schwingungsfrequenz der Ausgangsspannung in einem Bereich von 100 Hertz bis 3.000 Hertz, vorzugsweise in einem Bereich von 1000 Hertz bis 2500 Hertz, liegt.

3. Elektronikbaugruppe (1) nach Anspruch 1 oder 2, bei der ein Betrag der Ausgangsspannung zwischen 8 Volt und 25 Volt liegt.

4. Elektronikbaugruppe (1) nach einem der vorangegangenen Ansprüche, bei der ein Betrag der Eingangsspannung im Wesentlichen bei 30 Volt liegt.

5. Elektronikbaugruppe (1) nach einem der vorangegangenen Ansprüche, bei der der Abwärtswandler (4) wenigstens einen Transistor (S1, S2), insbesondere einen Feldeffekttransistor, aufweist, wobei die Steuereinheit (3) mit einem Steuereingang des Transistors (S1, S2) verbunden ist, um einen Schaltzustand des Transistors (S1, S2) zur Wandlung der Eingangsspannung zu steuern.

6. Elektronikbaugruppe (1) nach einem der vorangegangenen Ansprüche, bei der der Elektronikanal (2) oder die Elektronikkanäle (2) jeweils eine Vorrichtung zum Erfassen einer Stärke eines Stroms durch den jeweiligen Elektronikkanal (2) aufweisen.

7. Elektronikbaugruppe (1) nach einem der vorangegangenen Ansprüche, bei der die Steuereinheit (3) ein Field Programmable Gate Array oder ein Mikrocontroller ist.

8. Leitsystem für eine technische Anlage, insbesondere Fertigungs- oder Prozessanlage, das wenigstens einen Rechnereinheit zum Bedienen und Beobachten der technischen Anlage und eine mit der Rechnereinheit verbundene Elektronikbaugruppe (1) gemäß einem der Ansprüche 1 bis 7 umfasst.

9. Verfahren zum Betreiben einer Elektronikbaugruppe (1) für ein Automatisierungssystem, die Elektronikbaugruppe (1) aufweisend einen Elektronikkanal (2) oder eine Mehrzahl von Elektronikkanälen (2), wobei die Elektronikbaugruppe (1) wenigstens eine Steuereinheit (3) aufweist, ein Elektronikkanal (2) jeweils aufweisend:
- einen Spannungseingang (5) zum Anlegen einer Eingangsspannung an dem Elektronikanal (3),
- einen Spannungsausgang (6) zum Abgreifen einer Ausgangsspannung an dem Elektronikkanal (3), und
- einen Abwärtswandler (4), der zum Wandeln der an dem Spannungseingang (5) angelegten Eingangsspannung auf die betragsmäßig niedrigere Ausgangsspannung ausgebildet und vorgesehen ist, das Verfahren umfassend die folgenden Verfahrensschritte:
a) Anlegen einer Eingangsspannung an dem Spannungseingang (5) wenigstens eines Elektronikkanals (2),
b) Ansteuerung des Abwärtswandlers (4) des wenigstens einen Elektronikkanals (2) durch die Steuereinheit (3), derart, dass ein Signal gemäß dem HART-Standard, welcher zum
Anmeldetag der vorliegenden Anmeldung gültig war, über die Ausgangsspannung an dem wenigstens einen Elektronikkanal (2) abgreifbar ist.

10. Verfahren nach Anspruch 9, bei dem die an dem Spannungsausgang (6) anliegende Ausgangsspannung zum Betrieb einer Messeinrichtung zum Erfassen einer physikalischen Größe verwendet wird.

## Claims

1. Electronic assembly (1) for an automation system, the electronic assembly having an electronic channel (2) or a plurality of electronic channels, wherein the electronic assembly (1) has at least one control unit (3), an electronic channel (2) having in each case:
- a voltage input (5) for applying an input voltage to the electronic channel (2),
- a voltage output (6) for tapping off an output voltage at the electronic channel (2), and
- a buck converter (4), which is designed and provided for the purpose of converting the input voltage applied to the voltage input (5) to the output voltage that has a lower absolute value than the input voltage,
**characterised in that**
the control unit (3) is designed and provided for the purpose of controlling the buck converter (4) in such a manner that a signal according to the HART standard, which was valid on the date of filing the present application, can be tapped off at the respective electronic channel (2) using the output voltage.

2. Electronic assembly (1) according to claim 1, in which the control unit is designed and provided for the purpose of controlling the buck converter (4) in such a manner that an oscillation frequency of the output voltage is in a range from 100 hertz to 3000 hertz, preferably in a range from 1000 hertz to 2500 hertz.

3. Electronic assembly (1) according to claim 1 or 2, in which an amount of the output voltage is between 8 volts and 25 volts.

4. Electronic assembly (1) according to one of the previous claims, in which an amount of the input voltage is essentially 30 volts.

5. Electronic assembly (1) according to one of the previous claims, in which the buck converter (4) has at least one transistor (S1, S2), in particular a field effect transistor, wherein the control unit (3) is connected to a control input of the transistor (S1, S2) to control a switching state of the transistor (S1, S2) for converting the input voltage.

6. Electronic assembly (1) according to one of the previous claims, in which the electronic channel (2) or the electronic channels (2) each have an apparatus for detecting the strength of a current through the respective electronic channel (2).

7. Electronic assembly (1) according to one of the previous claims, in which the control unit (3) is a Field Programmable Gate Array or a microcontroller.

8. Control system for a technical installation, in particular a production or process installation, comprising at least one processor unit for operating and monitoring the technical installation and an electronic assembly (1) connected to the computer unit according to one of claims 1 to 7.

9. Method for operating an electronic assembly (1) for an automation system, the electronic assembly (1) having an electronic channel (2) or a plurality of electronic channels (2), wherein the electronic assembly (1) has at least one control unit (3), an electronic channel (2) having in each case:
- a voltage input (5) for applying an input voltage to the electronic channel (3),
- a voltage output (6) for tapping off an output voltage at the electronic channel (3), and
- a buck converter (4), which is designed and provided for the purpose of converting the input voltage applied to the voltage input (5) to the output voltage that has a lower absolute value, the method comprising the following method steps:
a) applying an input voltage to the voltage input (5) of at least one electronic channel (2),
b) controlling the buck converter (4) of the at least one electronic channel (2) by means of the control unit (3) in such a manner that a signal according to the HART standard, which was valid on the date of filing the present application, can be tapped off at the at least one electronic channel (2) using the output voltage.

10. Method according to claim 9, in which the output voltage applied to the voltage output (6) is used to operate a measuring device for detecting a physical variable.

## Revendications

1. Module (1) électronique d'un système d'automatisation, comportant un canal (2) électronique ou une pluralité de canaux électroniques, dans lequel le module (1) électronique a au moins une unité (3) de commande, un canal (2) électronique comportant respectivement :
- une entrée (5) de tension pour l'application d'une tension d'entrée au canal (2) électronique,
- une sortie (6) de tension pour le prélèvement d'une tension de sortie du canal (2) électronique, et
- un transformateur (4) abaisseur, qui est constitué et prévu pour transformer la tension d'entrée appliquée à l'entrée (5) de tension en la tension de sortie, dans lequel la tension de sortie est en valeur absolue plus basse que la tension d'entrée,
**caractérisé en ce que**
l'unité (3) de commande est constituée et prévue pour commander le transformateur (4) abaisseur de manière à pouvoir, par la tension de sortie du canal (2) électronique respectif, prélever un signal suivant la norme HART, qui était valable au jour de dépôt de la présente demande.

2. Module (1) électronique suivant la revendication 1, dans lequel l'unité de commande est constituée et prévue pour commander le transformateur (4) abaisseur, de manière à ce qu'une fréquence d'oscillation de la tension de sortie se trouve dans une plage de 100 hertz à 3000 hertz, de préférence dans une plage de 1000 hertz à 2500 hertz.

3. Module (1) électronique suivant la revendication 1 ou 2, dans lequel une valeur absolue de la tension de sortie est comprise entre 8 volts et 25 volts.

4. Module (1) électronique suivant l'une des revendications précédentes, dans lequel une valeur absolue de la tension d'entrée est sensiblement de 30 volts.

5. Module (1) électronique suivant l'une des revendications précédentes, dans lequel le transformateur (4) abaisseur a au moins un transistor (S1, S2), en particulier un transistor à effet de champ, dans lequel l'unité (3) de commande est connectée à une entrée de commande du transistor (S1, S2), afin de commander un état de commutation du transistor (S1, S2) pour la transformation de la tension d'entrée.

6. Module (1) électronique suivant l'une des revendications précédentes, dans lequel le canal (2) électronique ou les canaux (2) électroniques ont chacun un dispositif de détection d'une intensité d'un courant passant dans le canal (2) électronique respectif.

7. Module (1) électronique suivant l'une des revendications précédentes, dans lequel l'unité (3) de commande est un field programmable gate array ou une micro-unité de commande.

8. Système de conduite d'une installation technique, en particulier d'une installation de fabrication de processus, qui comprend au moins une unité informatique pour la commande et l'observation de l'installation technique et un module (1) électronique suivant l'une des revendications 1 à 7 raccordé à l'unité informatique.

9. Procédé pour faire fonctionner un module (1) électronique d'un système d'automatisation, le module (1) électronique comportant un canal (2) électronique ou une pluralité de canaux (2) électroniques, dans lequel le module (1) électronique a au moins une unité (3) de commande, un canal (2) électronique ayant respectivement :
- une entrée (5) de tension pour l'application d'une tension d'entrée au canal (3) électronique,
- une sortie (6) de tension pour le prélèvement d'une tension de sortie du canal (3) électronique, et
- un transformateur (4) abaisseur, qui est constitué et prévu pour la transformation de la tension d'entrée appliquée à l'entrée (5) de tension en la tension de sortie plus basse en valeur absolue, le procédé comprenant les stades de procédé suivants :
a) application d'une tension d'entrée à l'entrée (5) de tension d'au moins un canal (2) électronique,
b) commande du transformateur (4) abaisseur du au moins un canal (2) électronique par l'unité (3) de commande, de manière à pouvoir, en passant par la tension de sortie du au moins un canal (2) électronique, prélever un signal suivant la norme HART, qui était valable au jour de dépôt de la présente demande.

10. Procédé suivant la revendication 9, dans lequel on utilise la tension de sortie s'appliquant à la sortie (6) de tension pour faire fonctionner un dispositif de mesure en vue de la détection d'une grandeur physique.
